Europäisches Patentamt

(19) European Patent Office

Office européen des brevets

(11) Publication number: **0 178 190 B1**

(12) EUROPEAN PATENT SPECIFICATION

(45) Date of publication of patent specification: **20.05.92**  (51) Int. Cl.⁵: **G02F 1/135**, G02F 1/133, G06F 3/033, H01L 27/14

(21) Application number: **85307569.5**

(22) Date of filing: **10.10.85**

(54) **Optoelectronic panel and method of making the same.**

(30) Priority: **11.10.84 JP 213149/84**

(43) Date of publication of application:
**16.04.86 Bulletin 86/16**

(45) Publication of the grant of the patent:
**20.05.92 Bulletin 92/21**

(84) Designated Contracting States:
**DE FR GB**

(56) References cited:
**EP-A- 0 095 776**
**EP-A- 0 109 832**
**US-A- 4 345 248**

(73) Proprietor: **SEMICONDUCTOR ENERGY LAB-
ORATORY CO., LTD.
21-21 Kitakarasuyama 7-chome
Setagaya-ku Tokyo 157(JP)**

(72) Inventor: **Yamazaki, Shunpei c/o Semiconduc-
tor Energy
Laboratory Co. Ltd. 21-21 Kitakarasuyama
7-chome
Setagaya-ku Tokyo(JP)**

(74) Representative: **Colgan, Stephen James et al
CARPMAELS & RANSFORD 43 Bloomsbury
Square
London WC1A 2RA(GB)**

## Description

### BACKGROUND OF THE INVENTION

#### Field of the Invention

The present invention relates to an optoelectronic panel which has at least a liquid crystal display device and a photo detecting device formed on a common substrate. The invention also pertains to a method for the manufacture of such a panel.

#### Description of the Prior Art

Heretofore there has been proposed a display panel which employs m x n (where $n \geq 1$ and $m \geq 1$) liquid crystal display devices $D_{11}$ to $D_{1n}$, $D_{21}$ to $D_{2n}$, ... and $D_{m1}$ to $D_{mn}$.

In this display panel, a liquid crystal element $C_{ij}$ (where $i = 1, 2 ... m$; $j = 1, 2 ... n$) is connected via a nonlinear element $H_{ij}$ to a row line $x_i$ and a column line $Y_j$ at their intersection.

With such a display panel, an image display can be provided by driving the liquid crystal elements at the intersections of selected ones of row lines $x_1$ to $x_m$ and column lines $Y_1$ to $Y_n$ through the selected lines.

The conventional display panel employs insulated gate FETs as the nonlinear elements. The manufacture of the insulated gate FET calls for many steps using as many as six to eight photo masks.

Accordingly, the conventional display panel cannot be fabricated with high production yield, with ease and at low cost.

Furthermore, there has been proposed a write panel which employs m x n pressure-sensitive elements $K_{11}$ to $K_{1n}$, $K_{21}$ to $K_{2n}$, ... and $K_{m1}$ to $K_{mn}$ and in which the pressure-sensitive element $K_{ij}$ (where $i = 1, 2, ... m$ and $j = 1, 2, ... n$) is connected between a row line $X_i$ and a column line $Y_j$ at their intersection.

With such a write panel, by a pressurized write thereon by a pen or similar means, the coordinates of its locus on the write panel can be output on the row and column lines $X_1$ to $X_m$ and $Y_1$ to $Y_n$.

It is difficult, however, to press the pressure-sensitive elements under the locus with a predetermined value, and the pressure-sensitive elements are easily fatigued and are relatively low in response speed.

Accordingly, the conventional write panel is defective in that the coordinates of a locus of a pen or the like cannot be output on the row and column lines with high reliability and at high speed.

Moreover, there has not been proposed a highly useful panel which functions both as a display panel and as a write panel. It is frequently necessary to employ separate display and write panels in order to obtain both functions.

### SUMMARY OF THE INVENTION

It is therefore an object of the present invention to provide an improved optoelectronic panel whereby the panel comprises both means to display information and means for optical input of information. It is a further object of the invention to provide optoelectronic panels of this kind which can be made more cheaply and reliably than existing optoelectronic panels of this kind.

The present invention provides a liquid-crystal electro-optical device comprising a pair of substrates, at least one of which is transparent, a liquid crystal layer disposed between said pair of substrates wherein a plurality of picture elements are defined in said liquid crystal layer, a plurality of switching devices formed on one of said substrates for switching said plurality of picture elements, and photosensitive devices formed on one of said substrates for reading in optical information input from outside the panel, wherein said switching devices are composed of a non-single-crystal semiconductor diode.

In certain preferred embodiments of the invention the non-single-crystal semiconductor diode has a non-single-crystal NIN, NN⁻N, NP⁻N, NIPIN, PIP, PP⁻P, PN⁻P, or PINIP laminate structure.

In the preferred embodiment of the invention the non-single-crystal semiconductor diodes and the photosensitive devices are formed on a common substrate.

In the preferred embodiment of the invention, the photosensitive devices each comprise at least one non-single-crystal semiconductor photo-diode of the same structure as the non-single-crystal semiconductor diode of the switching device of the liquid crystal picture element. The photo-diode passes a photocurrent that depends on the intensity of the light incident on the photo-diode.

The non-single-crystal semiconductor diodes of the switching device and the photosensitive device can be manufactured more easily and with higher production yield than the insulated gate FET's used as the nonlinear elements in conventional liquid crystal display devices.

Accordingly, the optoelectronic panel of the present invention can be fabricated with good yield, with ease and at low cost.

In accordance with another aspect of the present invention, the liquid crystal display device has at least one liquid crystal element, across which a drive signal is applied via a nonlinear element which is a first non-single-crystal semiconductor diode, as described above.

The photo detecting device has at least one photo diode and a second non-linear element connected in series with the photo diode. The photo diode is a second non-single-crystal semiconductor diode which has a non-single-crystal semiconductor laminate member of an NIN, PIP, PIN or NIP structure. The second non-linear element is a third non-single-crystal semiconductor diode which has the same structure as does the first non-single-crystal semiconductor diode used as the nonlinear element in the liquid crystal display device. The photo diode produces a photo detecting signal corresponding to the intensity of light directed thereto. The photo detecting signal is led out through the second non-linear element to outside from the photo diode.

Other objects, features and advantages of the present invention will become more fully apparent from the following detailed description taken in conjunction with the accompanying drawings.

BRIEF DESCRIPTION OF THE DRAWINGS

Fig. 1 is a plan view schematically illustrating an embodiment of the optoelectronic panel of the present invention;

Fig. 2, 3, 4 and 5 are sectional views respectively taken on the lines II-II, III-III, IV-IV and V-V in Fig. 1;

Fig. 6 is a graph showing the voltage(V)-current-(A) characteristic of a non-single-crystal semiconductor diode used as first and second nonlinear elements in a liquid crystal display element and a photo detecting device, respectively, of the optoelectronic panel of the present invention depicted in Fig. 1;

Figs. 7A-7D are each a diagram showing energy bands of the non-single-crystal semiconductor diodes for explaining their operations in the liquid crystal display device and the photo detecting device of the optoelectronic panel of the present invention depicted in Fig. 1.

Fig. 8 is a graph showing the voltage(V)-current-(A) characteristic of a non-single-crystal semiconductor diode used as a photo diode in a photo detecting device of the optoelectronic panel of the present invention, using the light intensity as a parameter; and

Fig. 9 is an electrical connection diagram of the optoelectronic panel of the present invention depicted in Fig. 1;

DESCRIPTION OF THE PREFERRED EMBODIMENTS

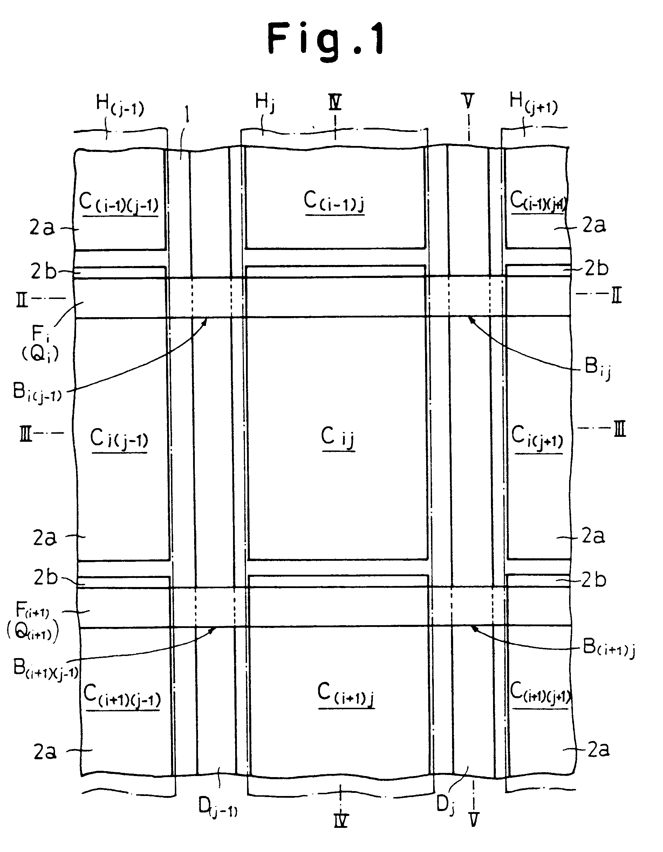

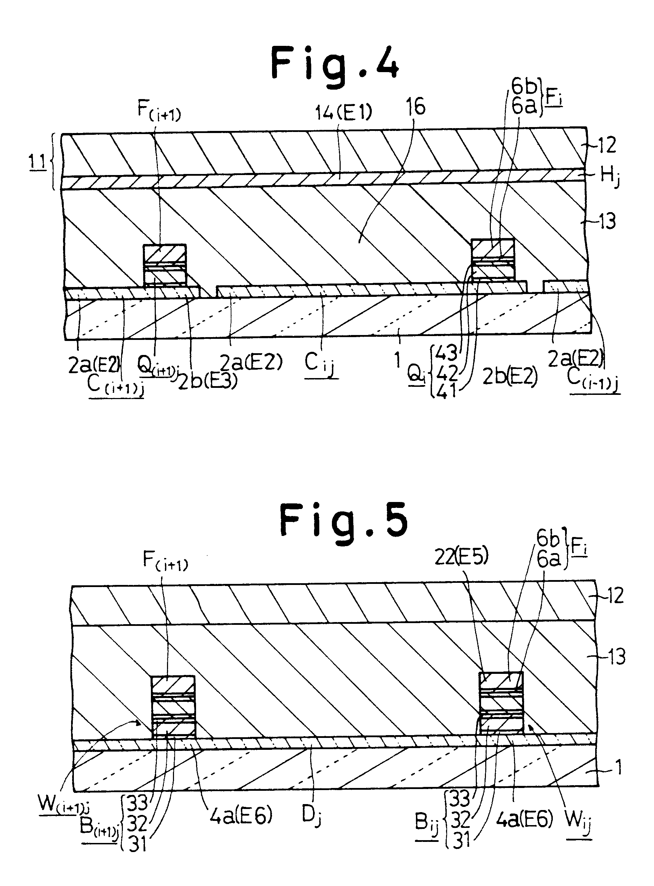

Figs. 1 to 5 illustrate an embodiment of the optoelectronic panel of the present invention, in which a substrate 1 has an insulating surface. The substrate 1 is transparent and formed of, for instance, alkaline free glass. The substrate 1 has arranged thereon in a matrix form m x n (which m $\geq$ 1 and n $\geq$ 1) conductive layers $C_{11}$ to $C_{1n}$, $C_{21}$ to $C_{2n}$, $C_{31}$ to $C_{3n}$, ... and $C_{m1}$ to $C_{mn}$. The conductive layer $C_{ij}$ (where i = 1, 2, ... m and j = 1, 2, ... n) is transparent and, for example, 420 $\mu$m wide and 520 $\mu$m long.

On the substrate 1 is formed, for instance, 100 $\mu$m wide conductive layer $D_j$ which extends in the column direction between the column of the conductive layers $C_{1j}$ to $C_{mj}$ and the column of the conductive layers $C_{1(j+1)}$ to $C_{m(j+1)}$ or $C_{1(j-1)}$ to $C_{m(j-1)}$ (where let it be assumed that (j + 1) does not take the value of (n + 1) and that (j-1) does not take the value of zero). The conductive layer $D_j$ is transparent.

On the conductive layer $D_j$, non-single-crystal semiconductor laminate member $B_{1j}$, $B_{2j}$, ... and $B_{mj}$, each substantially equal in width to the conductive layer $D_j$ and, for example, 100 $\mu$m wide, are formed. The laminate member $B_{ij}$ is formed on a part 4a of the conductive layer $D_j$ corresponding to one end portion 2b of the conductive layer $C_{ij}$ in lengthwise direction of the conductive layer $D_j$.

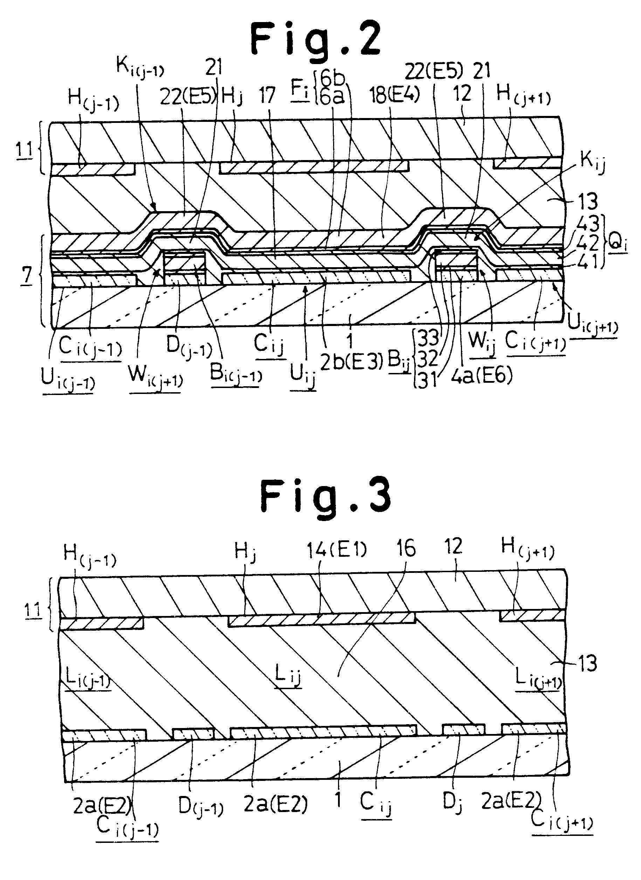

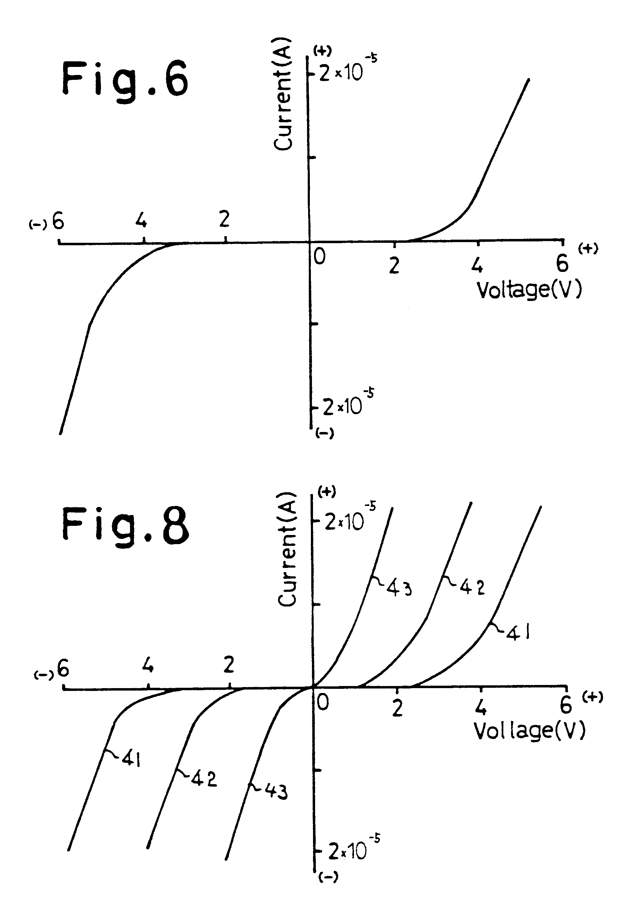

The non-single-crystal semiconductor laminate member $B_{ij}$ has, for instance, an n(or p)-i-(n or p) structure composed of an n(or p)-type layer 31, an i-type layer 32 and an n(or p)-type layer 33, as depicted in Figs. 2 and 5. The laminate member $B_{ij}$ may alternatively have an n(or p)-n$^-$(or p$^-$)-n(or p) structure composed of an n (or p)-type layer, an n$^-$ (or p$^-$)-type layer and an n(or p)-type layer, an n(or p)-p$^-$(or n$^-$)-n(or p) structure composed of an n(or p)-type layer, a p$^-$(or n$^-$)-type layer and an n(or p)-type layer, or an n(or p)-i-p(or n)-i-n(or p) structure composed of an n(or p)-type layer, an i-type layer, a p(or n)-type layer, an i-type layer and an n(or p)-type layer. Furthermore, the laminate member $B_{ij}$ may also have a p(or n)-i-n(or p) structure composed of a p(or n)-type layer, an i-type layer and an n(or p)-type layer, or a structure made up of a plurality of laminated p(or n)-i-n(or p) structure.

Furthermore, the substrate 1 has formed thereon, for example, 100 $\mu$m wide non-single-crystal semiconductor laminate member $Q_i$ which continuously extends in the row direction on the parts 2b of the conductive layers $C_{i1}$ to $C_{in}$ and the non-single-crystal semiconductor laminate member $B_{i1}$ to $B_{in}$.

The non-single-crystal semiconductor laminate member $Q_i$ has, for example, an n (or p)-i-n(or p) structure composed of an n(or p)- type layer 41, an i-type layer 42 and an n(or p)-type layer 43, as shown in Figs 2, 4 and 5. The laminate member $Q_i$ may also has an n(or p)-$n^-$(or $p^-$)-n(or p) structure composed of an n(or p)-type layer, an $n^-$(or $p^-$)-type layer and n(or p)-type layer, an n(or p)-$p^-$(or $n^-$)-n(or p) structure composed of an n(or p)-type layer, a $p^-$(or $n^-$)-type layer and an n(or p)-type layer, or an n(or p)-i-p(or n)-i-n(or p) structure composed of an n(or p)-type layer, an i-type layer, a p-(or n)-type layer, an i-type layer and an n(or p)-type layer.

The non-single-crystal semiconductor laminate layer $Q_i$ is covered over the entire area of its surface with a conductive layer $F_i$. The conductive layer $F_i$ is composed of a nontransparent layer 6a formed of, for instance, chromium and overlying the laminate member $Q_i$ and a conductive layer 6b as of aluminum formed on the layer 6a.

The conductive layers $C_{11}$ to $C_{1n}$, $C_{21}$ to $C_{2n}$, $C_{31}$ to $C_{3n}$ ... and $C_{m1}$ to $C_{mn}$, the conductive layers $D_1$ to $D_n$, the non-single-crystal semiconductor laminate member $B_{11}$ to $B_{1n}$, $B_{21}$ to $B_{2n}$, ... and $B_{m1}$ to $B_{mn}$, the non-single-crystal semiconductor laminate member $Q_1$ to $Q_n$ and the conductive layer $F_i$ make up a substrate member 7.

The substrate member 7 is formed, for example, as follows:

A first transparent conductive layer, which will ultimately form the conductive layers $C_{11}$ to $C_{mn}$ and $D_1$ to $D_n$ is deposited on the substrate 1 through a known method, for instance, a sputtering or electron beam evaporation process.

Next, the first conductive layer is subjected to a known patterning process using a first mask, providing the conductive layers $C_{11}$ to $C_{mn}$ and the conductive layers $D_1$ to $D_n$.

Next, a first non-single-crystal semiconductor laminate member, which will ultimately form the non-single-crystal semiconductor layer laminate members $B_{11}$ to $B_{1n}$, $B_{21}$ to $B_{2n}$ ... $B_{m1}$ to $B_{mn}$ is deposited by a known method, for example, the plasma CVD or photo CVD method on the substrate 1, in a manner to continuously extend covering the conductive layers $C_{11}$ to $C_{mn}$ and the conductive layers $D_1$ to $D_n$.

In my experiment, a glow discharge was produced over the substrate 1 at a high frequency of 13.56 MHz in an atmosphere containing silane $SiH_4$, phosphine $PH_3$ (or diborane $B_2H_6$) and hydrogen, with the substrate temperature held in the range of 200 to 250 °C. As a result of this, a first n(or p)-type micro-crystalline silicon layer, which had a conductivity of $10^{-2}$ to $10^5$ $(\Omega cm)^{-1}$ and contained hydrogen as a recombination center neutralizer, was deposited 30nm to 100nm thick on the substrate 1. Next, only silane, or silicon fluoride ($SiF_4$ or $SiF_2$) or hydrogen silicon fluoride ($H_3SiF$ or $H_2SiF_2$) and hydrogen was discharged into a plasma, by which a second i-type non-single-crystal silicon layer was deposited 0.2 to 1 $\mu m$ thick on the n-type layer. After this, a third n(or p)-type layer similar to the first n(or p)-type layer was deposited by the same method on the second i-type non-single-crystal silicon layer, thus obtaining the first laminate member having the n(or p)-i-n(or p) structure.

By the use of diborane ($B_2H_6$) (or phosphine $PH_3$) for the formation of the second i-type layer of the n(or p)-i-n(or p) structure, the laminate member can be formed as an n(or p)-$p^-$-n(or p)(or n(or p)-$n^-$-n(or p)) structure.

Furthermore, a fourth n(or p)-type layer similar to the abovesaid first n(or p)-type layers is deposited on the substrate 1 through the same method, and then a fifth i-type layer similar to the second i-type layer is formed on the fourth n(or p)-type layer through the same method. Next, silane, diborane (or phosphine) and hydrogen are discharged into a plasma, by which a sixth p(or n)-type non-single-crystal silicon layer is deposited on the fifth i-type layer. Following this, a seventh i-type layer similar to the fifth i-type layer is deposited by the same method on the sixth p(or n)-type layer. After this, an eight n(or p)-type layer similar to the fourth n(or p)-type layer is deposited by the same method on the seventh i-type layer, thus obtaining the second laminate member having the n(or p)-i-p(or n)-i-n(or p) structure. Moreover, a ninth p(or n)-type layer similar to the sixth p(or n)-type layer is deposited by the same method on the substrate 1, a tenth i-type layer similar to the fifth or seventh i-type layer is deposited by the same method on the ninth p(or n)-type layer and an eleventh n(or p)-type layer is deposited by the same method on the tenth i-type layer, obtaining a p(or n)-i-n(or p) structure. A laminate member made up of such a p(or n)-i-n(or p) structure can be obtained by repeating the abovementioned steps.

Next, the first non-single-crystal semiconductor laminate member is subjected to a known patterning process using a second mask, providing a plurality n of second non-single-crystal semiconductor laminate members which extend on the n conductive layers $D_1$ to $D_n$ over the entire length thereof, respectively.

Next, a third non-single-crystal semiconductor laminate member, which will ultimately form the non-single-crystal semiconductor laminate members $Q_1$ to $Q_m$, is deposited by a known method, for example, a plasma CVD or photo CVD method on the substrate, in a manner to continuously extend covering the conductive layers $C_{11}$ to $C_{mn}$ and the n second non-single-crystal semiconductor layers.

In my experiment, a glow discharge was produced over the substrate 1 at a high frequency of 13.56 MHz in an atmosphere containing silane $SiH_4$, methyl silane ($Si(CH_3)H^{3-n}$ (where n = 1 to 3), for example, dimethyl silane and phosphine $PH_3$ (or diborane $B_2H_6$), with the substrate temperature held in the range of 200 to 250 C. In this case, the dimethyl silane was added in the ratio of 1 to 0.5 percent by volume with respect to the silane $SiH_4$. As a result of this, an n(or p)-type microcrystalline silicon layer, which had a conductivity of $10^{-5}$ to $10^8$ $(\Omega cm)^{-1}$ and contained hydrogen as a recombination center neutralizer, was deposited 10 to 30nm thick on the substrate 1. Next, silane and methyl silane, or a mixture gas of silicon fluoride ($SiF_4$ or $SiF_2$) or hydrogen silicon fluoride ($H_3SiF$ or $H_2SiF_2$), methyl silane and hydrogen was discharged into a plasma, by which an i-type non-single-crystal silicon layer was deposited 0.2 to 1 $\mu$m thick on the n-type layer. In this instance, the methyl silane was added in the ratio of 1 to 0.5 percent by volume relative to the silane $SiH_4$ or the gas mixture. After this, another n(or p)-type layer similar to the above n(or p)-type layer was deposited by the same method on the i-type non-single-crystal silicon layer, thus obtaining the laminate member having the n(or p)-i-n(or p) structure. By the use of diborane ($B_2H_6$) (or phosphine $PH_3$) for the formation of the i-type layer of the n(or p)-i-n(or p) structure, the laminate member can be formed as an n(or p)-$p^-$-n(or p) or (n(or p)-$n^-$-n(or p)) structure.

After the formation of the third non-single-crystal semiconductor laminate member, a second conductive layer which would ultimately form the conductive layer 6a of the conductive layers $F_1$ to $F_m$ and a third conductive layer which would ultimately form the conductive layers 6b of the conductive layer $F_1$ to $F_m$ were deposited in that order on the third non-single-crystal laminate member through, for instance, the electron beam evaporation or sputtering method.

Next, the second and third conductive layers, the third non-single-crystal semiconductor laminate member and the second non-single-crystal semiconductor laminate member are patterned by a known method through a third mask into the conductive layers $F_1$ to $F_m$, the non-single-crystal semiconductor laminate members $Q_1$ to $Q_m$ and the non-single-crystal semiconductor laminate members $B_{11}$ to $B_{mn}$.

Another substrate member 11, which is different from the aforementioned substrate member 7, is produced.

The substrate member 11 has, on a substrate 12 corresponding to the substrate 1, a conductive layer $H_j$ which corresponds to the column of the conductive layers $C_{1j}$ to $C_{mj}$ and is substantially equal in width to them. The conductive layer $H_j$ can be obtained by forming a fourth conductive layer through a known method on the substrate 12 and then patterning the fourth conductive layer through a fourth mask.

The substrate member 11 is disposed upside down by a suitable support means (not shown) in opposing relation to the top of the substrate member 7 in parallel thereto. In this instance, the columns of the conductive layers $C_{1j}$ to $C_{mj}$ of the substrate member 7 and the conductive layer $H_j$ of the substrate member 11 are held face-to face with each other.

A space defined by the substrate members 7 and 11 is filled with liquid crystal 13.

In the structure described above in conjunction with Figs. 1 through 5, a part 2a of the conductive layer $C_{ij}$ on the substrate 1, except the part 2b, a part 14 of the conductive layer $H_j$ on the substrate 12 which is face-to-face with the part 2a and a part 16 of the liquid crystal 13 between the parts 2a and 14 constitute a liquid crystal element $L_{ij}$ which employs the parts 2a and 14 as its electrodes E2 and E1, respectively. When a low voltage, for example below 1.9 V or so is applied across the electrodes E1 and E2, the liquid crystal element $L_{ij}$ remains opaque, but when a high voltage, for example, above 2.7 V or so is applied, it becomes transparent.

The part 2b of the conductive layer $C_{ij}$, a part 17 of the non-single-crystal semiconductor laminate member $Q_i$ overlying the part 2b and a part 18 of the conductive layer $F_i$ overlying the part 17 constitute a non-single-crystal semiconductor diode $U_{ij}$ which employs the parts 2b and 18 as its electrodes $E_3$ and $E_4$, respectively. The diode $U_{ij}$ presents such a nonlinear voltage(V)-current(A) characteristic as shown in Fig. 6.

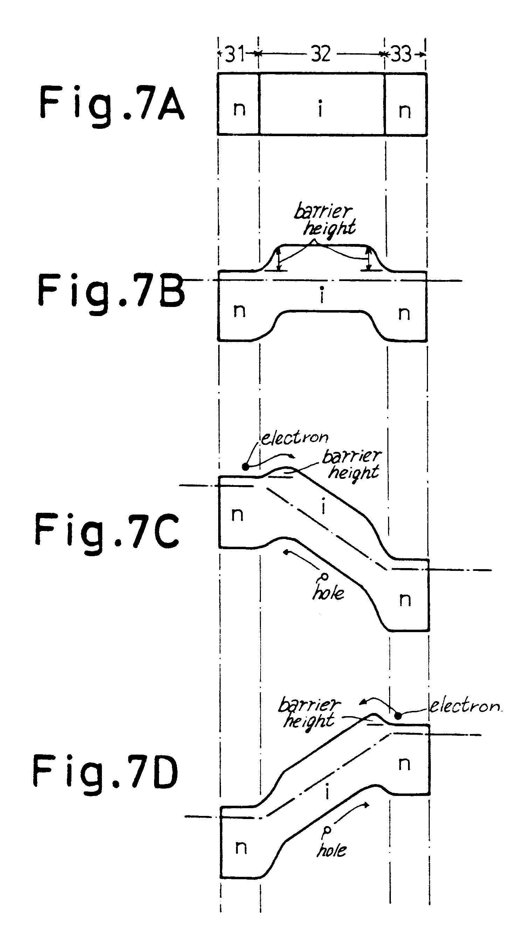

The reason for which the diode $U_{ij}$ presents such a nonlinear characteristic as shown in Fig. 6 is as follows: When no voltage is applied across the electrodes E3 and E4, the energy band structure of the diode $U_{ij}$ of the construction depicted in Fig. 7A becomes as depicted in Fig. 7B. When a voltage is applied which makes the electrode E4 positive relative to the electrode E3, the energy band structure becomes as shown in Fig. 7C and a voltage is applied which makes the electrode E3 positive relative to the electrode E4, the energy band structure becomes as shown in Fig. 7D.

The liquid crystal element $L_{ij}$ and the diode $U_{ij}$ have their electrodes E2 and E3 electrically connected via the conductive layer $C_{ij}$, and hence are

connected in series with each other, making up a liquid crystal display device $M_{ij}$ which employs E1 and E4 as its pair of electrodes.

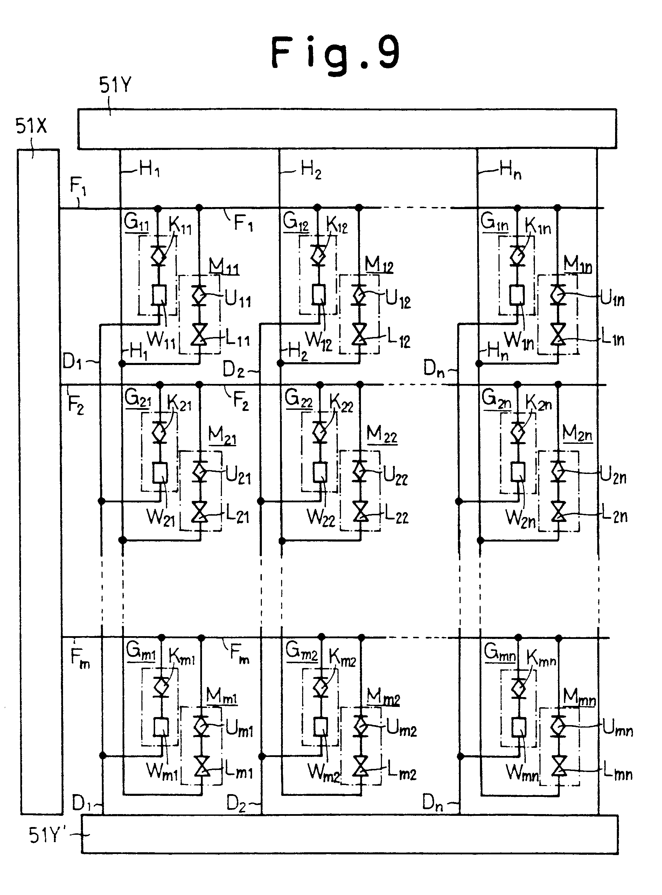

The part 4a of the conductive layer $D_j$ underlying the non-single-crystal semiconductor laminate member $B_{ij}$ and the non-single-crystal semiconductor laminate member $B_{ij}$ constitute a non-single-crystal semiconductor diode $W_{ij}$. The diode $W_{ij}$ has a similar voltage(V)-current(A) characteristics as the diode $U_{ij}$ but by which voltage is shifted according to the light intensity, as indicated by the curves 41, 42 and 43 in Fig 8. The curve 41 shows the voltage-current characteristic when the diode $W_{ij}$ is not irradiated by light, and the curve 42 and 43 the voltage-current characteristics when the diode $W_{ij}$ is irradiated by light with intensities of 450 and 550 lux, respectively.

A part 21 of the non-single-crystal semiconductor layer laminate member $Q_i$ overlying the non-single-crystal semiconductor laminate member $B_{ij}$ and a part 22 of the conductive layer $F_i$ overlying the part 21 constitute a non-single-crystal semiconductor diode $K_{ij}$. The diode $K_{ij}$ has voltage(V)-current(A) characteristics similar to these of the diode $U_{ij}$, as shown in Fig. 6.

The diode $U_{ij}$ is laminated on the diode $W_{ij}$. Accordingly, the diode $W_{ij}$ and $U_{ij}$ are connected in series with each other, making up a photo detecting device $G_{ij}$ which employs the part 22 of the conductive layer $F_i$ and the part 4a of the conductive layer $D_j$ as its electrodes E5 and E6.

According to the arrangement described above with respect to Figs. 1 through 5, the electrodes E1 of the liquid crystal display devices $M_{1j}$ to $M_{mj}$ are connected to the conductive layer $H_j$ acting as a column line, the electrodes $E_4$ of the display device $M_{i1}$ to $M_{in}$ are connected to the conductive layer $F_i$ serving as a row line, the electrodes E5 of the photo detecting device $G_{1j}$ to $G_{mj}$ are connected to the conductive layer $D_j$ acting as a column line and the electrodes E6 of the photo detecting device $G_{i1}$ to $G_{in}$ are connected to the conductive layer $F_i$ acting as a row line.

Therefore, according to the arrangement described above in connection with Figs. 1 to 5, since the liquid crystal element $L_{ij}$ can be controlled to be transparent or nontransparent by applying, through use of row and column decoders 51X and 51Y, across the liquid crystal display device $M_{ij}$ via the conductive layers $F_i$ and $H_j$ a drive signal which assumes a low voltage and a high voltage, an image display can be provided.

Furthermore, by irradiating the photo diode $W_{ij}$ with a light beam having an intensity of, for example, 500 lux, through use of a light pen, an output resulting from the detection of the light directed to the photo diode $W_{ij}$ can be obtained with the row decoder 51X and another column decoder 51Y' through the nonlinear element $K_{ij}$. In this case, a selection signal is applied across the photo detecting device $G_{ij}$ through the conductive layers $F_i$ and $D_j$. Accordingly, by describing a locus of a light beam on the outer surface of the substrate 1, it is possible to obtain an output representative of the coordinates of the locus. While in the above the present invention has been described with respect to the case where the photo detecting device $G_{ij}$ has the nonlinear element $K_{ij}$ connected in series with the photo diode $W_{ij}$, it is also possible to omit the non-single-crystal semiconductor laminate member $B_{ij}$ and to replace the nonlinear element $K_{ij}$ by the photo diode $W_{ij}$. In this instance, by making the non-single-crystal semiconductor laminate member $Q_i$ identical with the above-described one $B_{ij}$ in terms of material and layer structure, the laminate member $Q_i$ is equipped with the same photosensitivity as that of the laminate member $B_{ij}$ which is higher than the photosensitivity of the laminate member $Q_i$ in the afore-described embodiment which is provided with the nonlinear element $K_{ij}$. Moreover, in order to prevent the nonlinear element $U_{ij}$ from becoming unnecessarily photosensitive, it is preferable that a nontransparent conductive layer be formed on the part 2a of the conductive layer $C_{ij}$ underlying the laminate member $Q_i$ which constitutes the nonlinear element $U_{ij}$.

It will be apparent that the above embodiment should be construed as merely illustrative of the present invention and should not be construed as limiting the invention specifically thereto and that various modifications and variations may be effected without departing from the scope of the invention as claimed.

## Claims

1. A liquid crystal electro-optical device comprising:

   a pair of substrates (1, 12), at least one of which is transparent;

   a liquid crystal layer (13) disposed between said pair of substrates wherein a plurality of picture elements ($L_{ij}$) are defined in said liquid crystal layer;

   a plurality of switching devices ($U_{ij}$) formed on one of said substrates (1) for switching said plurality of picture elements ($L_{ij}$); and

   photosensitive devices ($W_{ij}$) formed on one of said substrates for reading in optical information input from outside the panel,

   characterised in that said switching devices ($U_{ij}$) are composed of a non-single crystal semiconductor diode.

**2.** The electro-optical device of claim 1 wherein said non-single crystal semiconductor diode ($U_{ij}$) has an NIN structure.

**3.** The electro-optical device of claim 1 wherein said non-single crystal semiconductor diode ($U_{ij}$) has an NN$^-$N structure.

**4.** The electro-optical device of claim 1 wherein said non-single crystal semiconductor diode ($U_{ij}$) has an NP$^-$N structure.

**5.** The electro-optical device of claim 1 wherein said non-single crystal semiconductor diode ($U_{ij}$) has an NIPIN structure.

**6.** The electro-optical device of claim 1 wherein said non-single crystal semiconductor diode ($U_{ij}$) has a PIP structure.

**7.** The electro-optical device of claim 1 wherein said non-single crystal semiconductor diode ($U_{ij}$) has a PP$^-$P structure.

**8.** The electro-optical device of claim 1 wherein said non-single crystal semiconductor diode ($U_{ij}$) has a PN$^-$P structure.

**9.** The electro-optical device of claim 1 wherein said non-single crystal semiconductor diode ($U_{ij}$) has a PINIP structure.

**10.** The electro-optical device of claim 1 wherein said switching devices ($U_{ij}$) and said photosensitive devices ($W_{ij}$) are formed on a common substrate (1).

**11.** The electro-optical device of claim 1 wherein said photosensitive devices ($W_{ij}$) are connected in series with another non-single crystal semiconductor diode ($K_{ij}$).

**12.** The electro-optical device of claim 11 wherein the same non-single-crystal diode comprises said non single-crystal semiconductor diode ($U_{ij}$) and said another non-single crystal semiconductor diode ($K_{ij}$).

**Revendications**

**1.** Dispositif électro-optique à cristal liquide comprenant :

une paire de substrats (1, 12) dont au moins un est transparent ;

une couche de cristal liquide (13) disposée entre lesdits deux substrats, une pluralité d'éléments d'image ($L_{ij}$) étant définie dans ladite couche de cristal liquide ;

une pluralité de dispositifs de commutation ($U_{ij}$) formés sur l'un desdits substrats (1) pour commuter ladite pluralité d'éléments d'image ($L_{ij}$) ; et

des dispositifs photo-sensibles ($W_{ij}$) formés sur un desdits substrats pour lire une information optique entrée depuis l'extérieur du panneau,

caractérisé en ce que lesdits dispositifs de commutation ($U_{ij}$) sont constitués par une diode semiconductrice en un matériau non mono-cristallin.

**2.** Dispositif électro-optique selon la revendication 1, dans lequel ladite diode semiconductrice en un matériau non mono-cristallin ($U_{ij}$) a une structure NIN.

**3.** Dispositif électro-optique selon la revendication 1, dans lequel ladite diode semiconductrice en un matériau non mono-cristallin ($U_{ij}$) a une structure NN$^-$N.

**4.** Dispositif électro-optique selon la revendication 1, dans lequel ladite diode semiconductrice en un matériau non mono-cristallin ($U_{ij}$) a une structure NP$^-$N.

**5.** Dispositif électro-optique selon la revendication 1, dans lequel ladite diode semiconductrice en un matériau non mono-cristallin ($U_{ij}$) a une structure NIPIN.

**6.** Dispositif électro-optique selon la revendication 1, dans lequel ladite diode semiconductrice en un matériau non mono-cristallin ($U_{ij}$) présente une structure PIP.

**7.** Dispositif électro-optique selon la revendication 1, dans lequel ladite diode semiconductrice en un matériau non mono-cristallin ($U_{ij}$) a une structure PP$^-$P.

**8.** Dispositif électro-optique selon la revendication 1, dans lequel ladite diode semiconductrice en un matériau non mono-cristallin ($U_{ij}$) a une structure PN$^-$P.

**9.** Dispositif électro-optique selon la revendication 1, dans lequel ladite diode semiconductrice en un matériau non mono-cristallin ($U_{ij}$) a une structure PINIP.

**10.** Dispositif électro-optique selon la revendication 1, dans lequel lesdits dispositifs de commutation ($U_{ij}$) et lesdits dispositifs photo-sensibles ($W_{ij}$) sont formés par un substrat commun (1).

11. Dispositif électro-optique selon la revendication 1, dans lequel lesdits dispositifs photo-sensibles (W$_{ij}$) sont connectés en série avec une autre diode semiconductrice en un matériau non mono-cristallin (K$_{ij}$).

12. Dispositif électro-optique selon la revendication 11, dans lequel la même diode en un matériau non mono-cristallin comprend ladite diode semiconductrice en un matériau non mono-cristallin (U$_{ij}$) et ladite autre diode semiconductrice en un matériau non mono-cristallin (U$_{ij}$) et ladite autre diode semiconductrice en un matériau non mono-cristallin (K$_{ij}$).

**Patentansprüche**

1. Elektrooptische Flüssigkristalleinrichtung mit einem Paar von Substraten (1, 12), von denen zumindest eines transparent ist; einer Flüssigkristallschicht (13), die zwischen dem Paar von Substraten angeordnet ist, wobei eine Vielzahl von Bildelementen (L$_{ij}$) in der Flüssigkristallschicht definiert sind; einer Vielzahl von Schalteinrichtugen (U$_{ij}$), die auf einer der Substrate (1) gebildet sind zum Schalten der Vielzahl von Bildelementen (L$_{ij}$); und lichtempfindlichen Einrichtungen (W$_{ij}$), die auf einer der Substrate gebildet sind zum Einlesen der optischen Informationseingabe von außerhalb der Bedienungsvorrichtung

daduch **gekennzeichnet,** daß Schalteinrichtungen (U$_{ij}$) eine Nicht-Einkristallhalbleiterdiode umfassen.

2. Elektrooptische Einrichtung nach Anspruch 1, bei welcher die Nicht-Einkristallhalbleiterdiode (U$_{ij}$) eine NIN-Struktur aufweist.

3. Elektrooptische Einrichtung nach Anspruch 1, bei welcher die Nicht-Einkristallhalbleiterdiode (U$_{ij}$) eine NN⁻N-Struktur aufweist.

4. Elektrooptische Einrichtung nach Anspruch 1, bei welcher die Nicht-Einkristallhalbleiterdiode (U$_{ij}$) eine NP⁻N-Struktur aufweist.

5. Elektrooptische Einrichtung nach Anspruch 1, bei welcher die Nicht-Einkristallhalbleiterdiode (U$_{ij}$) eine NIPIN-Struktur aufweist.

6. Elektrooptische Einrichtung nach Anspruch 1, bei welcher die Nicht-Einkristallhalbleiterdiode (U$_{ij}$) eine PIP-Struktur aufweist.

7. Elektrooptische Einrichtung nach Anspruch 1, bei welcher die Nicht-Einkristallhalbleiterdiode (U$_{ij}$) eine PP⁻P-Struktur aufweist.

8. Elektrooptische Einrichtung nach Anspruch 1, bei welcher die Nicht-Einkristallhalbleiterdiode (U$_{ij}$) eine PN⁻P-Struktur aufweist.

9. Elektrooptische Einrichtung nach Anspruch 1, bei welcher die Nicht-Einkristallhalbleiterdiode (U$_{ij}$) eine PINIP-Struktur aufweist.

10. Elektrooptische Einrichtung nach Anspruch 1, bei welcher die Schalteinrichtungen (U$_{ij}$) und die lichtempfindlichen Einrichtungen (W$_{ij}$) auf einem gemeinsamen Substrat (1) gebildet sind.

11. Elektrooptische Einrichtung nach Anspruch 1, bei welcher die lichtempfindlichen Einrichtungen (W$_{ij}$) mit einer anderen Nicht-Einkristallhalbleiterdiode (K$_{ij}$) in Reihe geschaltet sind.

12. Elektrooptische Einrichtung nach Anspruch 11, bei welcher dieselbe Nicht-Einkristalldiode die Nicht-Einkristallhalb-leiterdiode (U$_{ij}$) und die andere Nicht-Einkristallhalbleiterdiode (K$_{ij}$) umfaßt.

# Fig.1

# Fig.2

# Fig.3

# Fig.4

# Fig.5

# Fig.6

Current(A)

(+) 2 × 10⁻⁵

(−) 6    4    2

0    2    4    6 (+)

Voltage(V)

2 × 10⁻⁵

(−)

# Fig.8

Current(A)

(+) 2 × 10⁻⁵

43    42    41

(−) 6    4    2

0    2    4    6 (+)

Voltage(V)

41    42    43

2 × 10⁻⁵

(−)

Fig.7A

Fig.7B

Fig.7C

Fig.7D

Fig.9